# EUROPÄISCHE PATENTSCHRIFT

(11) **EP 1 033 905 B1**
(45) Veröffentlichungstag und Bekanntmachung des Hinweises auf die Patenterteilung: **04.05.2005**
(21) Anmeldenummer: 00103860.3
(22) Anmeldetag: 24.02.2000
(51) Int. Cl.: H05B 37/02, G08B 26/00

(54) **Modulares Präsenzmeldersystem**
Modular motion detector system
Système modulaire de détection de présence

(30) Priorität: 03.03.1999 DE 29903828 U
(43) Veröffentlichungstag der Anmeldung: 06.09.2000
(73) Patentinhaber: Merten GmbH & Co. KG, 51674 Wiehl (DE)
(72) Erfinder: Schlechtingen, Peter Dipl.-Ing., 51597 Morsbach (DE)
(74) Vertreter: Selting, Günther, Dipl.-Ing.

(56) Entgegenhaltungen:
- DE-A- 3 920 122
- GB-A- 2 270 403
- PATENT ABSTRACTS OF JAPAN vol. 1996, no. 02, 29. Februar 1996 (1996-02-29) -& JP 07 263151 A (MATSUSHITA ELECTRIC WORKS LTD), 13. Oktober 1995 (1995-10-13)
- PATENT ABSTRACTS OF JAPAN vol. 1997, no. 01, 31. Januar 1997 (1997-01-31) -& JP 08 227609 A (MATSUSHITA ELECTRIC WORKS LTD), 3. September 1996 (1996-09-03)
- WIER H J: "MELDUNGS- INTELLIGENZ DURCH EINEN BAUSTEIN" PROTECTOR, GRAF UND NEUHAUS, ZURICH, CH, Bd. 19, Nr. 6, 1. Dezember 1991 (1991-12-01), Seite 27,30,32 XP000244623 ISSN: 0256-4319

## Beschreibung

Die Erfindung betrifft ein modulares Präsenzmeldersystem, mit einem Steuergerät und mindestens einem Präsenzmelder, der über ein Verbindungskabel mit dem Steuergerät verbunden ist.

Präsenzmelder werden dazu benutzt, die Anwesenheit einer Person festzustellen, um daraufhin eine Leuchte oder einen anderen Stromverbraucher einzuschalten. Präsenzmelder enthalten einen Infrarotsensor und eine den Infrarotsensor überwachende Sensor-Auswerteschaltung. DE 195 41 665 C1 beschreibt einen Bewegungsmelder und eine Beleuchtungsanlage mit Bewegungsmelder. Hierbei sind die Bewegungsmelder in einem Einbaugehäuse untergebracht, das in eine genormte Bohrung einer Wand- oder Deckenverkleidung eingesetzt werden kann. Der Bewegungsmelder wird durch einen Transformator gespeist. Er weist zwei Kabel auf, von denen eines mit der Kupplung eines Netzkabels verbunden wird, während der andere an die Primärseite des Transformators angeschlossen werden kann. Der Anschluss mehrerer Bewegungsmelder ist nicht vorgesehen.

Ein modulares Präsenzmeldersystem, von dem der Oberbegriff des Patentanspruchs 1 ausgeht, ist beschrieben in JP 07263151 A. Dieses Präsenzmeldersystem enthält eine Hauptsteuervorrichtung und eine Vielzahl von Präsenzmeldern, die mit einer Signalleitung verbunden und an das Steuergerät angeschlossen sind. Die Hauptsteuervorrichtung liefert über die Signalleitung Steuersignale an Leuchten, die ebenfalls an die Signalleitung angeschlossen sind. Jede Leuchte enthält ein lokales Steuergerät mit einem Signalempfangseingang, der an die Signalleitung angeschlossen wird und einem Signalsendeausgang, der ebenfalls an die Signalleitung angeschlossen wird. Auf diese Weise können die Leuchten entsprechend dem Ort, an dem eine Person anwesend ist, gezielt eingeschaltet werden, um diesen Ort mehr oder weniger hell zu beleuchten.

Der Erfindung liegt die Aufgabe zugrunde, ein modulares Präsenzmeldersystem zu schaffen, das auf einfache Weise zu verlegen und zu installieren ist.

Die Lösung dieser Aufgabe erfolgt erfindungsgemäß mit den im Anspruch 1 angegebenen Merkmalen.

Bei dem erfindungsgemäßen Präsenzmeldersystem weist jeder Präsenzmelder zwei Anschlussvorrichtungen auf, deren Kontakte miteinander verbunden sind. Hierdurch ist es möglich, einen Präsenzmelder an das Steuergerät anzuschließen und einen zweiten Präsenzmelder nicht direkt mit dem Steuergerät, sondern mit dem ersten Präsenzmelder zu verbinden. Sämtliche Präsenzmelder werden nach Art einer Kette verschaltet, wobei die Versorgungsleitungen und ein Bus durch alle Präsenzmelder durchgeschleift werden. Hierbei ist nur jeweils ein Verbindungskabel zwischen zwei Präsenzmeldern erforderlich. Es braucht also nicht jeder Präsenzmelder mit einem eigenen Verbindungskabel mit dem Steuergerät verbunden zu werden, was erheblich größere Leitungslängen zur Folge hätte.

Das erfindungsgemäße modulare Präsenzmeldersystem eignet sich insbesondere für solche Fälle, in denen ein größeres Gebiet auf Präsenz überwacht werden soll, so dass mehrere Präsenzmelder erforderlich sind. Ein Präsenzmelder, der anspricht, leitet diese Information über weitere Präsenzmelder an das Hauptsteuergerät. Zu diesen Informationen kann auch eine den jeweiligen Präsenzmelder kennzeichnende Information gehören, so dass das Hauptsteuergerät eine Information darüber erhält, welcher Präsenzmelder angesprochen hat. In Abhängigkeit hiervon können ggf. bestimmte Leuchten eingeschaltet werden, die das dem betreffenden Präsenzmelder entsprechende Gebiet beleuchten. Es ist aber auch möglich, die Signale aller Präsenzmelder in gleicher Weise auszuwerten, wobei eine Beleuchtungsanlage eingeschaltet wird, wenn mindestens ein Präsenzmelder die Anwesenheit einer Person erkannt hat.

Ein besonderer Vorteil der Erfindung besteht in der Einfachheit der Installation. Vorzugsweise sind die Präsenzmelder in Einbaugehäusen untergebracht, die in der Installationsöffnung einer Wand oder. Decke eingesetzt werden können und mit Haltemitteln zum Festhalten versehen sind. Solche Installationsöffnungen dienen in der Regel zum Anbringen kleiner runder Leuchten. Der Präsenzmelder wird anstelle einer solchen Leuchte in die Installationsöffnung eingesetzt. Die Verdrahtung erfolgt durch Verlegen des Verbindungskabels im Wand- oder Deckenhohlraum zu dem nächsten Präsenzmelder. Der Präsenzmelder wird von außen in die Installationsöffnung gedrückt, wo er sich mit den Haltemitteln festhält.

Im folgenden wird unter Bezugnahme auf die Zeichnungen ein Ausführungsbeispiel der Erfindung näher erläutert.

Es zeigen:
- Fig. 1: eine schematische Darstellung eines Präsenzmeldersystems und
- Fig. 2: ein schematisches Blockschaltbild des Präsenzmeldersystems.

Das Präsenzmeldersystem weist ein Hauptsteuergerät 10 auf, das an Netzleitungen L,N angeschlossen wird. Das Hauptsteuergerät 10 enthält ein Netzteil 11, das die Netzspannung in eine Versorgungsgleichspannung umwandelt, eine Hauptauswerteschaltung 12 in Form eines Mikroprozessors, der die Signale der einzelnen Präsenzmelder verarbeitet, und ein Schaltteil 13, welches von der Hauptauswerteschaltung 12 gesteuert wird und einen externen Verbraucher 14 schaltet.

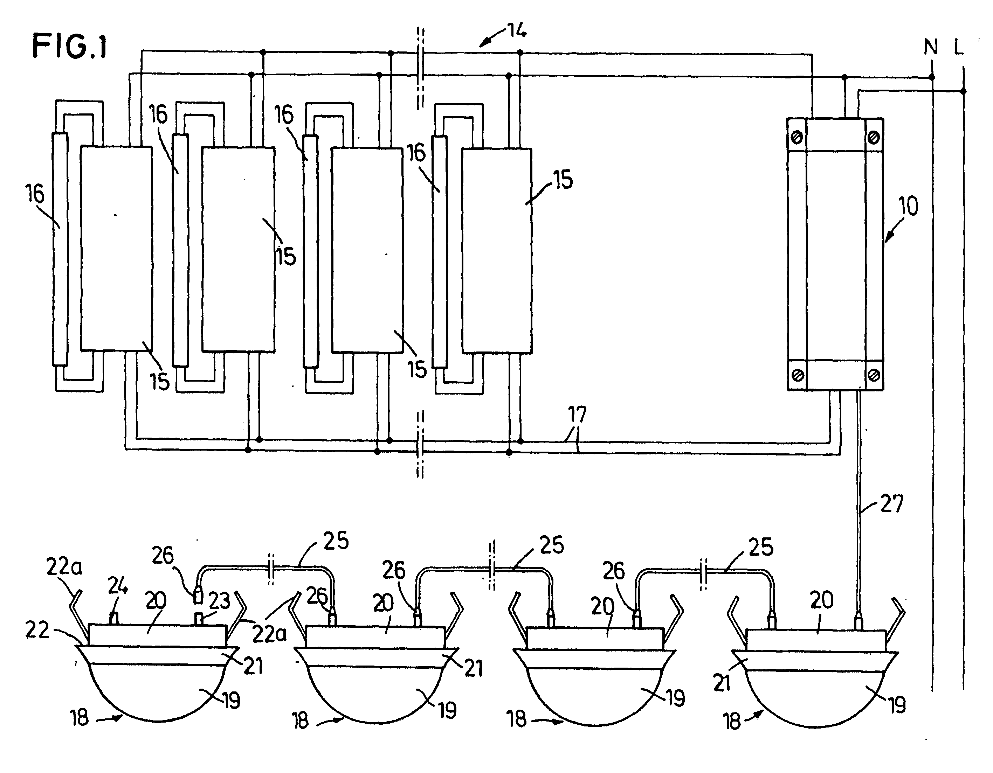

Gemäß Fig. 1 besteht der Verbraucher 14 aus zahlreichen dimmbaren elektronischen Vorschaltgeräten 15, die jeweils eine Leuchtstofflampe 16 betreiben. Über Dimm-Steuerleitungen 17 wird den einzelnen Vorschaltgeräten 15 ein Gleichspannungs-Dimmsignal vom Steuergerät zugeführt.

An das Steuergerät sind mehrere Präsenzmelder 18 angeschlossen. Jeder Präsenzmelder enthält einen (nicht dargestellten) Infrarotsensor, der von einem kuppelförmigen Linsenschirm 19 umgeben ist. Der Linsenschirm 19 lenkt einfallende Infrarotstrahlung fokussierend auf den Infrarotsensor. Ferner enthält der Präsenzmelder einen Helligkeitsmesser, der die Schaltfunktion bei Tageslicht unterdrückt, so daß der Verbraucher nur dann eingeschaltet wird, wenn bei Anwesenheit von ungenügendem Umgebungslicht der Infrarotsensor anspricht.

Jeder Präsenzmelder 18 weist ein generell zylindrisches Gehäuse 20 auf, das an seinem vorderen Ende durch den Linsenschirm 19 verschlossen ist. Das Gehäuse ist von einem Rand 21 umgeben, der eine Anschlagschulter 22 zum Ansetzen gegen den Rand der Installationsöffnung bildet. Am Umfang des Gehäuses 20 sind Haltemittel in Form federnder Zungen 22a angebracht, die radial nach außen federn und das Gehäuse in der Installationsöffnung sichern. An der dem Linsenschirm 19 abgewandten Rückseite des Gehäuses 20 sind zwei Anschlußvorrichtungen 23,24 vorgesehen, von denen jede vierpolig ist. Ein Verbindungskabel 25, das an beiden Enden gleiche Stecker 26 aufweist, dient dazu, die Anschlußvorrichtung 24 des einen Präsenzmelders mit der Anschlußvorrichtung 23 des benachbarten Präsenzmelders zu verbinden. Dadurch können sämtliche Präsenzmelder 19 in der in Fig. 1 dargestellten Weise nach Art einer Kette miteinander verbunden werden, wobei die Verbindungskabel 25 jeweils zwei benachbarte Präsenzmelder verbinden. Der dem Steuergerät 10 am nächsten benachbarte Präsenzmelder 18 ist über ein zum Steuergerät 10 gehörendes Verbindungskabel 27 mit dem Steuergerät verbunden.

Die Kabel 25,27 sind vieradrig. Sie enthalten zwei erste Adern 28, die mit dem Netzteil 11 im Steuergerät 10 verbunden werden und die Versorgungsgleichspannung weiterleiten, und zwei zweite Adern 29, die mit der Hauptauswerteschaltung 12 verbunden werden. Damit keine Adernvertauschungen auftreten, sind die Anschlußvorrichtungen 23,24 und die Stecker 26 so ausgebildet, daß sie nur in einer einzigen Stellung zusammengesteckt werden können.

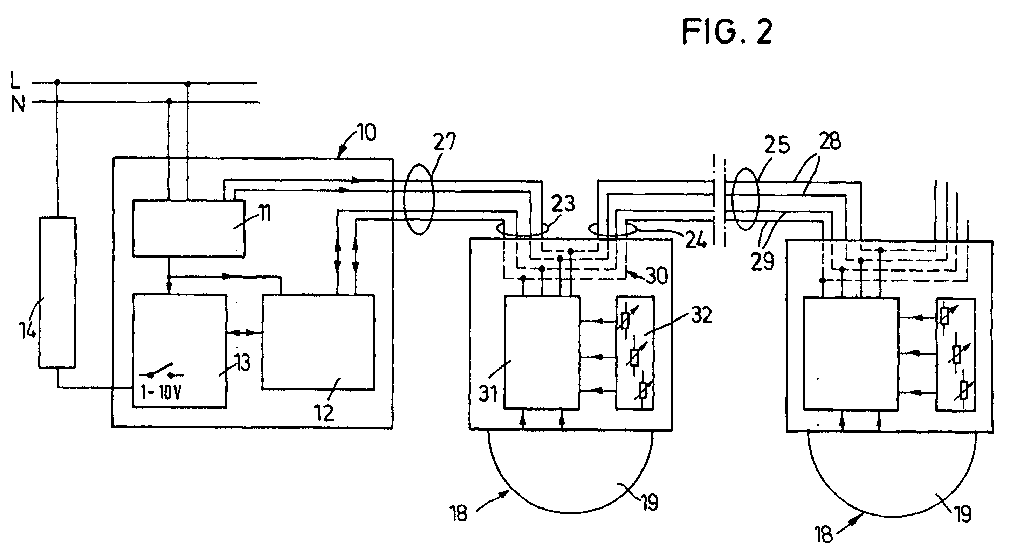

Wie Fig. 2 zeigt, sind durch Leitungen 30 im Innern des Präsenzmelders jeweils gleiche Kontakte der beiden Anschlußvorrichtungen 23,24 untereinander verbunden. Auf diese Weise wird jede der Adern eines Kabels 25 durch den betreffenden Präsenzmelder 18 durchgeschleift.

Der Präsenzmelder enthält eine Sensor-Auswerteschaltung 31 in Form eines Mikroprozessors. Diese korrespondiert mit der Hauptauswerteschaltung 12 über die zweiten Adern 29 des Verbindungskabelsystems. Diese zweiten Adern 29 bilden einen Systembus, an den sämtliche Präsenzmelder angeschlossen sind.

Ferner enthält jeder Präsenzmelder 18 eine Stellgliedbaugruppe 32 mit Stellgliedern in Form von Potentiometern, an denen die Ansprechempfindlichkeit, die Zeitdauer und ggf. andere Parameter manuell eingestellt werden können. Die Stellgliedeinheit 32 ist mit der Sensor-Auswerteschaltung 31 verbunden, um an diese die eingestellten Parameter zu liefern.

Bei der Installation des Präsenzmeldesystems werden die einzelnen Präsenzmelder 18 in Installationsöffnungen einer Hohlraumdecke oder Hohlraumwand eingesetzt. Vor dem Einsetzen werden in dem Hohlraum zuerst die Verbindungskabel 25 verlegt und deren Stecker 26 werden dann mit den Anschlußvorrichtungen 23,24 verbunden. Erst danach erfolgt das Eindrücken des Präsenzmelders in die Installationsöffnung, wobei die Haltemittel 23 das jeweilige Gehäuse 20 in der Installationsöffnung verrasten. Auf diese Weise kann eine größere Reihe von Präsenzmeldern 18 installiert werden, wobei jeder Präsenzmelder nur mit den jeweils beiden nächstbenachbarten Präsenzmeldern über ein Verbindungskabel 25 verbunden werden muß. Es ist insbesondere nicht erforderlich, jeden Präsenzmelder direkt mit dem Steuergerät 10 zu verbinden.

## Patentansprüche

1. Modulares Präsenzmeldersystem mit einem Steuergerät (10), das eine Hauptauswerteschaltung (12) und ein Schaltteil (13) zum Schalten eines Verbrauchers (14) aufweist, und mehreren Präsenzmeldern (18), von denen jeder Anschlussvorrichtungen aufweist,
**dadurch gekennzeichnet,**
**dass** die Präsenzmelder (18) jeweils einen Infrarotsensor und eine Sensor-Auswerteschaltung (31) enthalten,
**dass** jeder Präsenzmelder (18) mit zwei Anschlussvorrichtungen (23,24) versehen ist, die Kontakte aufweisen, welche miteinander verbunden sind, um mehrere Präsenzmelder nach Art einer Kette hintereinander an das Steuergerät (10) anzuschließen,
**dass** das Steuergerät (10) ein Netzteil (11) zur Erzeugung einer Versorgungsspannung für die Präsenzmelder (18) enthält,
und **dass** Verbindungs Kabel (25) zum Übertragen der Versorgungsspannung und von Signalen vorgesehen sind, die an beiden Enden zu den Anschlussvorrichtungen (23,24) passende Stecker (26) aufweisen.

2. Modulares Präsenzmeldersystem nach Anspruch 1, **dadurch gekennzeichnet, dass** die beiden Anschlussvorrichtungen (23,24) einander gleich sind, und dass die Stecker (26) an den Enden eines Verbindungskabels (25) ebenfalls einander gleich sind.

3. Modulares Präsenzmeldersystem nach Anspruch 1 oder 2, **dadurch gekennzeichnet, dass** das Verbindungskabel (25) zwei mit dem Netzteil (11) verbundene erste Adern (28) und zwei mit der Hauptauswerteschaltung (12) verbundene zweite Adern (29) aufweist, und dass die zweiten Adern (29) einen Bus bilden, der die Sensor-Auswerteschaltungen (31) aller angeschlossenen Präsenzmelder (18) mit der Hauptauswerteschaltung (12) verbindet.

4. Modulares Präsenzmeldersystem nach einem der Ansprüche 1-3, **dadurch gekennzeichnet, daß** jeder Präsenzmelder (18) ein Einbaugehäuse (20) aufweist, das in eine Installationsöffnung einsetzbar ist und Haltemittel (22A) zum Festhalten aufweist, ud daß die Anschlußvorrichtungen (23,24) auf der dem Sensorteil abgewandten Rückseite des Einbaugehäuses (20) angeordnet sind.

## Claims

1. Modular motion detector system comprising a control device (10) with a main evaluating circuit (12) and a switching circuit (13) for switching a load (14), and comprising a plurality of motion detectors (18), each of which has connection means,
**characterized in**
**that** the motion detectors (18) each include an infrared sensor and a sensor evaluating means (31),
**that** each motion detector (18) is provided with two connecting devices (23, 24) having contacts that are connected with each other so as to connect a plurality of motion detectors serially in the manner of a chain to the control device (10).
**that** the control device (10) includes a power supply (11) for generating a supply voltage for the motion detectors (18), and
**that** connecting cables (25) are provided for conveying the supply voltage and signals, both ends of the cables being provided with plugs (26) mating with the connecting devices (23, 24).

2. Modular motion detector system of claim 1, **characterized in that** the two connecting devices (23, 24) are identical and that the plugs (26) at the ends of a connecting cable (25) are also identical.

3. Modular motion detector system of claim 1 or 2, **characterized in that** the connecting cable (25) has two first wires (28) connected to the power supply (11) and two second wires (29) connected to the main evaluating circuit, and that the second wires (29) form a bus that connects the sensor evaluating circuits of all motion detectors (18) connected thereto to the main evaluating circuit (12).

4. Modular motion detector system of one of claims 1-3, **characterized in that** each motion detector (18) comprises an installation housing (20) that may be inserted into an installation opening and comprises retaining means (22A) for retention, and that the connecting devices (23, 24) are arranged on the rear of the installation housing (20) averted from the sensor part.

## Revendications

1. Système de détection de présence modulaire comprenant un appareil de commande (10) qui présente un circuit d'exploitation principal (12) et un élément de commutation (13) pour commuter un consommateur (14), et plusieurs détecteurs de présence (18) dont chacun présente des dispositifs de connexion,
**caractérisé en ce que**
les détecteurs de présence (18) contiennent respectivement un capteur infrarouge et un circuit d'exploitation de capteur (31),
chaque détecteur de présence (18) est muni de deux dispositifs de connexion (23, 24) qui présentent des contacts reliés les uns aux autres pour connecter en chaîne plusieurs détecteurs de présence à l'appareil de commande (10),
l'appareil de commande (10) contient un bloc d'alimentation (11) pour générer une tension d'alimentation pour les détecteurs de présence (18), et
des câbles de liaison (25) sont prévus pour la transmission de la tension d'alimentation et de signaux, qui présentent, aux deux extrémités, des connecteurs (26) adaptés aux dispositifs de connexion (23, 24).

2. Système de détection de présence modulaire selon la revendication 1, **caractérisé en ce que** les deux dispositifs de connexion (23, 24) sont identiques, et les connecteurs (26) aux extrémités d'un câble de liaison (25) sont également identiques.

3. Système de détection de présence modulaire selon la revendication 1 ou 2, **caractérisé en ce que** le câble de liaison (25) présente deux premiers conducteurs (28) reliés au bloc d'alimentation (11) et deux seconds conducteurs (29) reliés au circuit d'exploitation principal (12), et que les seconds conducteurs (29) forment un bus qui relie au circuit d'exploitation principal (12) les circuits d'exploitation de capteur (31) de tous les détecteurs de présence (18) connectés.

4. Système de détection de présence modulaire selon l'une quelconque des revendications 1 à 3, **caractérisé en ce que** chaque détecteur de présence (18) présente un boîtier d'installation (20) pouvant être inséré dans une ouverture de montage et présentant des moyens d'arrêt pour le maintien en place (22a), et que les dispositifs de connexion (23, 24) sont disposés sur la face arrière du boîtier d'installation (20) opposée à l'élément capteur.
